# EUROPÄISCHE PATENTSCHRIFT

(11) **EP 1 834 687 B1**
(45) Veröffentlichungstag und Bekanntmachung des Hinweises auf die Patenterteilung: **11.06.2008**
(21) Anmeldenummer: 07102544.9
(22) Anmeldetag: 16.02.2007
(51) Int. Cl.: B01D 46/42

(54) **Luftfilteranschlusseinheit**
Air filter connector unit
Unité de raccordement de filtre à air

(30) Priorität: 16.03.2006 DE 102006012590
(43) Veröffentlichungstag der Anmeldung: 19.09.2007
(73) Patentinhaber: MANN+HUMMEL GmbH, 71638 Ludwigsburg (DE)
(72) Erfinder: Bauder, Ralf, 68775, Ketsch (DE); Dworatzek, Klemens, 68535, Edingen (DE)

(56) Entgegenhaltungen:
- US-A1- 3 574 988
- US-A1- 3 757 752
- US-A1- 5 882 367

## Beschreibung

Die Erfindung betrifft eine Luftfilteranschlusseinheit mit einem Anschlussflansch und einem damit über eine Schnappverbindung koppelbaren Anschlussstutzen.

Bei Luftfilteranschlusseinheiten sind ein Luftfiltergehäuse und ein Luftleitungselement, das die die gefilterte Luft weiter leitet, beispielsweise ein Schlauch, zu verbinden. Das Luftleitungselement wird üblicherweise auf einen Anschlussstutzen am Luftfiltergehäuse aufgeschoben. Insbesondere wenn das Luftleitungselement vorgegebene Biegungen enthält oder der Anschlussstutzen abgewinkelt ausgebildet ist, kann es notwendig sein, eine Verdrehbarkeit des Anschlussstutzens gegenüber dem Anschlussflansch vorzusehen, um das Luftleitungselement in einer ersten Winkellage aufschieben zu können und dann durch Verdrehen des Stutzens so im Motorraum platzieren zu können, dass es in dem dafür vorgesehenen Bauraum liegt. Eine Verdrehbarkeit hilft auch, evtl. Torsionsspannungen abzubauen.

Bei einer aus der US 5 882 367 bekannten Luftfilteranschlusseinheit ist eine Schnappverbindung vorgesehen, die eine Verdrehung des Stutzens gegenüber dem Flansch ermöglicht, nachdem der Stutzen in die Aufnahmeausnehmung des Flansches eingeschoben worden ist. Die Schnappverbindung besteht aus einen schräg angestellten Absatz am Flansch, der durch eine Verdickung am Stutzen elastisch verformt wird und hinter der Verdickung wieder ausfedert, wodurch die Verbindung hergestellt ist.

Die Festigkeit einer solchen Schnappverbindung ist abhängig von der Höhe und dem Haltewinkel der Hinterschneidung. Da die Fügekräfte vom Fügewinkel und ebenfalls von der Hinterschneidung abhängig sind, ergibt sich eine gegenseitige Abhängigkeit. Bei manueller Montage sind die Fügekräfte begrenzt, insbesondere bei einer ungünstigen Einbaulage in einem engen Motorraum, und damit sind auch die erreichbaren Haltekräfte begrenzt.

Aufgabe der Erfindung ist es, bei einer Luftfilteranschlusseinheit mit einem Anschlussflansch und einem damit über eine Schnappverbindung koppelbaren Anschlussstutzen das Verhältnis von der möglichen Haltekraft zur erforderlichen Fügekraft der Schnappverbindung zu erhöhen.

Gelöst wird diese Aufgabe durch Luftfilteranschlusseinheit mit einem Anschlussflansch und einem damit über eine Schnappverbindung koppelbaren Anschlussstutzen, bei der der Anschlussflansch eine runde Aufnahmeausnehmung mit wenigstens einem Innengewindegang aufweist, der in einzeln ausfederbare, bogenförmige Gewindegangsegmente unterteilt ist, und bei der der Anschlussstutzen zylindrisch ausgebildet ist und wenigstens ein Bewegungsgewinde aufweist, welches in einer Freilaufnut am Anschlussstutzen endet.

Eine weitere Lösung ist durch eine Luftfilteranschlusseinheit mit den Merkmalen des Anspruchs 5 angegeben, bei der Gewindegangsegmente am Anschlussstutzen und ein Bewegungsgewinde außen am Anschlussflansch vorgesehen sind.

Durch das erfindungsgemäß vorgesehene Bewegungsgewinde braucht der Benutzer beim Einfügen des Anschlussstutzens nur vergleichsweise geringe Kräfte aufzubringen, um den Stutzen in den Flansch eindrehen zu können, egal, ob das Bewegungsgewinde als Trapez- oder Sägezahngewinde profiliert ist. Zugleich können in axialer Richtung hohe Kräfte erreicht werden. Dies wird noch dadurch begünstigt, dass bei üblichen Durchmessern von Luftleitungswegen und üblichen Steigungen beim Bewegungsgewinde große Umfangslängen gegeben sind und damit im Gewinde lange Wege zurückgelegt werden müssen, um einen relativ kleinen axialen Vorschub zu bewirken. Durch Segmentierung wenigstens eines Gewindegangs, der nach einer ersten bevorzugten Ausführungsform am Anschlussflansch angeordnet ist, aber auch in umgekehrter Weise am Anschlussstutzen angeordnet sein kann, ist ein Ausfedern der Gewindesegmente möglich, wenn der Anschlussstutzen seine vorgesehene Endposition im Flansch erreicht hat. Die Segmente des Gewindeganges rasten dann nach und nach in der umlaufenden Freilaufnut ein. Sind alle Gewindesegmente dort eingerastet, können Sie auch bei einer Umkehrung der Drehrichtung des Anschlussstutzens nicht wieder in das Bewegungsgewinde einfahren. Die Gewindesegmente erreichen also einen Freigang und sind ohne axiale Endposition drehbar. Der Anschlussstutzen ist damit innerhalb der Freilaufnut verdrehbar, aber axial festgelegt.

Durch die reduzierten Fügekräfte wird eine ergonomische Verbesserung erreicht. Durch die elastisch verformbaren Gewindesegmente werden außerdem hohe Zugspannungen am Umfang, wie sie bei herkömmlichen Schnappverbindungen auftreten, vermieden.

Ein zusätzlicher Bund kann hinter der Freilaufnut vorgesehen sein, so dass ein axialer Festanschlag hinter der Nut gebildet ist und verhindert wird, dass die Gewindesegmente auf weitere Umfangsbereiche des Anschlussstutzens aufgleiten.

Die Sicherung gegen Herausdrehen wird dadurch verbessert, dass zwischen dem Ende des Bewegungsgewindes und der Freilaufnut ein zusätzlicher ringförmiger Absatz angeordnet ist, dessen Höhe größer ist als die Höhe der Gewindegänge. Der Absatz kann auch durch einen Teilbereich des auslaufenden Gewindegangs des Bewegungsgewindes selbst gebildet sein, der aber kantiger profiliert ist.

Um das Eindrehen des Stutzens im Flansch zu erleichtern, ist es vorteilhaft, das Bewegungsgewinde konisch auszuführen. Damit kann zu Beginn der Verbindung noch ein Spiel bestehen, das das Eindrehen der Gewindesegmente in das Bewegungsgewinde erleichtert. Nachdem alle Gewindesegmente elastisch in einer Weise verbogen sind, dass sie in den Gewindegängen des Bewegungsgewindes geführt sind, steigt dessen Gesamtdurchmesser kontinuierlich leicht an, bis nur noch ein sehr geringes Spiel zwischen Bewegungsgewinde und Gewindesegmenten besteht. Die Verbindung muss dann mit Kraft weiter gedreht werden, bis die ersten Gewindesegmente in die Freilaufnut einfedern und dadurch das Weiterdrehen der noch stramm in den Gewindegängen geführten Gewindesegmente wieder erleichtert wird.

Die Erfindung wird nachfolgend mit Bezug auf die Zeichnungen näher erläutert. Die Figuren zeigen im Einzelnen:
- Fig. 1a: einen Aufnahmeflansch in perspektivischer Ansicht,

- Fig. 1b: einen Anschlussstutzen in perspektivischer Ansicht,
- Fig. 2: eine Luftfilteranschlusseinheit in Schnittansicht,
- Fig. 3: ein Detail der Schnittansicht aus Fig. 2, und
- Fig. 4: einen fertigen Luftfilter in perspektivischer Ansicht.

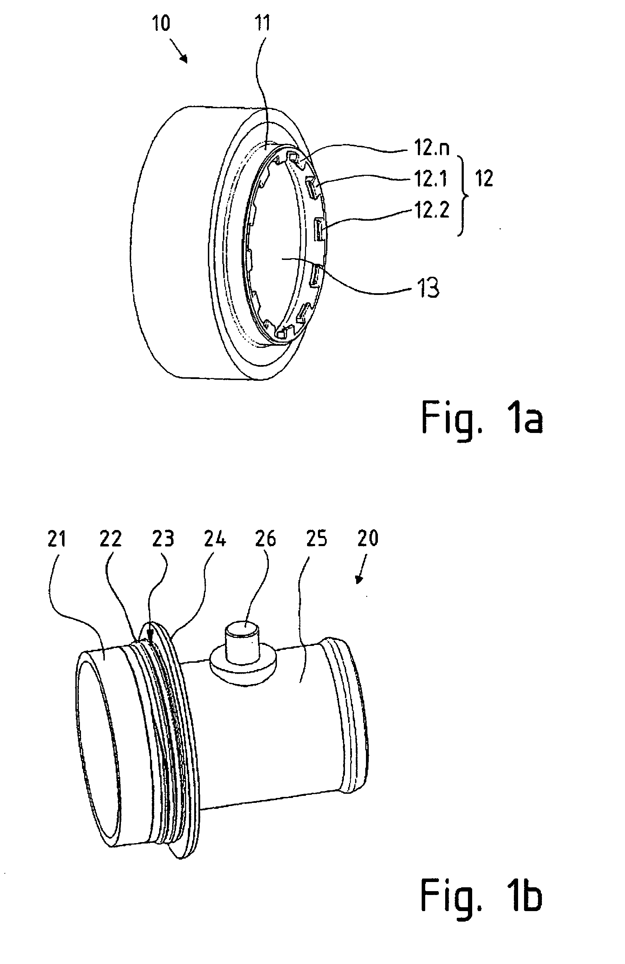

Fig. 1a zeigt einen Anschlussflansch 11, der hier Teil eines zylindrischen Elements 10 ist, welches wiederum Teil eines Luftfiltergehäuses sein kann. Vom Anschlussflansch 11 aus ragen mehrere Gewindesegmente 12.1, 12.2 ... 12.n ins Innere des Flansches, in eine Ausnehmung 13 hinein. Die Gewindesegmente 12.1, 12.2 ... 12.n bilden ein zusammen Innengewinde 12.

In Fig. 1b ist ein zu dem Anschlussflansch 11 kompatibler Anschlussstutzen 20 gezeigt. Dieser besitzt einen zylindrischen Absatz 21, auf dem ein Gewinde 22 vorgesehen ist. Hinter dem Gewinde 22 ist eine umlaufende Freilaufnut 23 vorgesehen, die durch einen Bund 24 begrenzt wird.

Für die eigentliche Verbindung mit einem weiterführenden Luftleitungselement steht ein Stutzenabschnitt 25 zur Verfügung, in welchen bei dem dargestellten Ausführungsbeispiel noch ein Abzweig 26 als Wartungsschalteranschluss eingebracht ist.

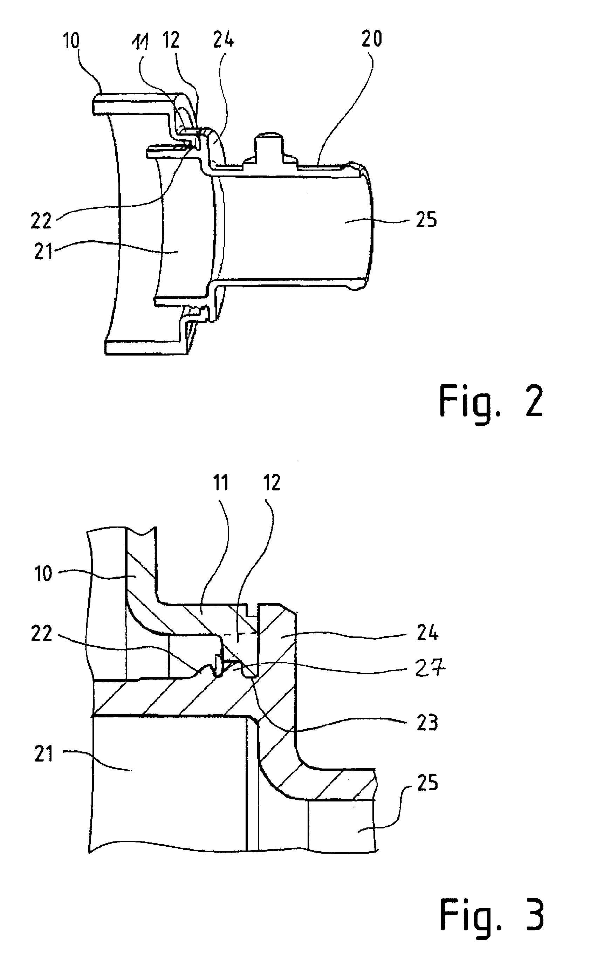

Fig. 2 zeigt die fertige Luftfilteranschlusseinheit mit dem Anschlussstutzen 20 und dem Anschlussflansch 11. Der Anschlussstutzen 24 liegt hier axial mit seinem Bund 24 dicht an dem Flansch 11 an. Die Gewindesegmente 12 haben das Außengewinde 22 am Zylinderabschnitt 21 passiert und liegen in der Freilaufnut.

Die Situation bei der fertig gestellten Luftfilteranschlusseinheit ist in Fig. 3 nochmals im Detail gezeigt.

Hinter dem Außengewinde 22 am Zylinderabschnitt 21 ist ein zusätzlicher ringförmiger Absatz 27 vorgesehen, über den hinweg die Gewindesegmente 12 bei der Montage bewegt werden müssen, um in die Freilaufnut 23 einfedern zu können.

Der Absatz 27 kann auch durch den letzten Gewindegang des Außengewindes 22 gebildet sein, allerdings ist die Querschnittsform dort dann kantig gewählt, so dass durch das Zusammenspiel der Gewindesegmente 12, des Bundes 24, des Absatzes 27 und der Freilaufnut 23 eine weitgehend spielfreie und passgenaue, formschlüssige Verbindung hergestellt ist.

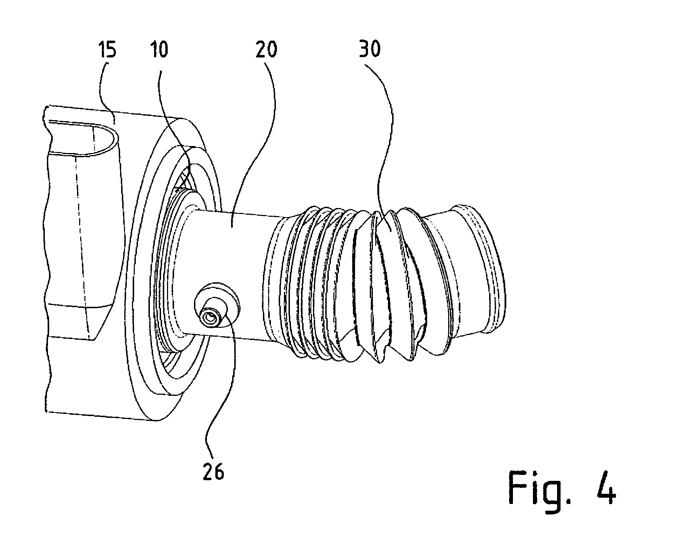

Fig. 4 zeigt einen möglichen Anwendungsfall. Hier ist der Abschlussflansch in einer zylindrischen Wandung 10 eines Luftfiltergehäuses 15 integriert. Der Anschlussstutzen 20 kann durch die erfindungsgemäße Ausbildung durch Einschrauben leicht montiert werden. Nach der Montage ist eine Verdrehbarkeit gegeben, so dass beispielsweise die Lage eines Abzweigs 26 für einen Wartungsschalter nachträglich korrigiert und an die gegebenen Verhältnisse im Motorraum angepasst werden kann. Ein als Wellrohr ausgebildeter Schlauch 30 ist auf den Anschlussstutzen 20 aufgeschoben und führt zu weiteren Baugruppen, beispielsweise einer Brennkraftmaschine.

## Patentansprüche

1. Luftfilteranschlusseinheit mit einem Anschlussflansch (11) und einem damit über eine Schnappverbindung koppelbaren Anschlussstutzen (20), **dadurch gekennzeichnet, dass** der Anschlussflansch (11) eine runde Ausnehmung (13) mit wenigstens einem Innengewindegang (12) aufweist, der in einzeln ausfederbare, bogenförmige Gewindegangsegmente (12.1, 12.2, ...,12.n) unterteilt ist, und dass der Anschlussstutzen (20) zylindrisch ausgebildet ist und wenigstens ein Bewegungsgewinde (22) aufweist, welches in einer Freilaufnut (23) am Anschlussstutzen (20) endet.

2. Luftfilteranschlusseinheit nach Anspruch 1, **dadurch gekennzeichnet, dass** die Freilaufnut (23) an einem Bund (24) endet, dessen Außendurchmesser größer ist als der Innendurchmesser des Innengewindegangs (12).

3. Luftfilteranschlusseinheit nach Anspruch 1, **dadurch gekennzeichnet, dass** die Freilaufnut (23) an einem Bund (24) endet, dessen Außendurchmesser größer ist als ein Teilkreisdurchmesser am Anschlussflansch (11), von dem aus sich die Gewindesegmente (12) radial nach innen erstrecken.

4. Luftfilteranschlusseinheit mit einem Anschlussflansch und einem damit über eine Schnappverbindung koppelbaren Anschlussstutzen, **dadurch gekennzeichnet, dass** der Anschlussflansch eine runde Ausnehmung mit wenigstens einem Innengewindegang aufweist, und dass der Anschlussstutzen zylindrisch ausgebildet ist und wenigstens einen Außengewindegang aufweist, welcher in einzeln ausfederbare, bogenförmige Gewindegangsegmente unterteilt ist und in einer Freilaufnut am Anschlussflansch endet.

5. Luftfilteranschlusseinheit nach Anspruch 4, **dadurch gekennzeichnet, dass** die Freilaufnut an einem Bund endet, dessen Innendurchmesser größer ist als der Außendurchmesser des Bewegungsgewindes.

6. Luftfilteranschlusseinheit nach Anspruch 5, **dadurch gekennzeichnet, dass** die Freilaufnut an einem Bund endet, dessen Innendurchmesser größer ist als ein Teilkreisdurchmesser am Anschlussstutzen, von dem aus sich die Gewindesegmente radial nach außen erstrecken.

7. Luftfilteranschlusseinheit nach einem der Ansprüche 1 bis 6, **dadurch gekennzeichnet, dass** sich die Gewindegangsegmente (12.1, 12.2,...,12.n) über einen Bogen von 360° mit Bezug auf die Mittelachse des Anschlussstutzens (11) erstrecken.

8. Luftfilteranschlusseinheit nach einem der Ansprüche 1 bis 7, **dadurch gekennzeichnet, dass** zwischen der Freilaufnut (23) und dem Bewegungsgewinde ein ringförmiger Absatz angeordnet ist, dessen Höhe größer ist als die Höhe der Gewindegänge am Bewegungsgewinde.

9. Luftfilteranschlusseinheit nach einem der Ansprüche 1 bis 8, **dadurch gekennzeichnet, dass** das Bewegungsgewinde (22) konisch ausgebildet ist.

10. Luftfilter mit einer Luftfilteranschlusseinheit nach einem der vorhergehenden Ansprüche, wobei der Anschlussflansch (11) in eine Wandung (10) eines Luftfiltergehäuses (15) integriert ist und ein Luftleitungselement (30) mit dem Anschlussstutzen (25) verbunden ist.

## Claims

1. Air filter connection unit including a connecting flange (11) and a connection piece (20) that is couplable to the said connecting flange by means of a snap-type connection, **characterised in that** the connecting flange (11) includes a circular recess (13) with at least one internal thread course (12), which is divided into individually releasable, arcuate thread course segments (12.1, 12.2, ...12.n), and **in that** the connection piece (20) is cylindrical and includes at least one movement thread (22), which ends in a free-wheel groove (23) on the connection piece (20).

2. Air filter connection unit according to claim 1, **characterised in that** the free-wheel groove (23) ends at a flange (24), the outside diameter of which is greater than the inside diameter of the internal thread course (12).

3. Air filter connection unit according to claim 1, **characterised in that** the free-wheel groove (23) ends at a flange (24), the outside diameter of which is greater than a reference circle diameter at the connection flange (11), from which the thread segments (12) extend radially inwards.

4. Air filter connection unit with a connecting flange and a connection piece that is couplable to the said connecting flange by means of a snap-type connection, **characterised in that** the connecting flange includes a circular recess with at least one internal thread course, and **in that** the connection piece is cylindrical and includes at least one external thread course, which is divided into individually releasable, arcuate thread course segments and ends in a free-wheel groove at the connecting flange.

5. Air filter connection unit according to claim 4, **characterised in that** the free-wheel groove ends at a flange, the inside diameter of which is greater that the outside diameter of the movement thread.

6. Air filter connection unit according to claim 5, **characterised in that** the free-wheel groove end at a flange, the inside diameter of which is greater than a reference circle diameter at the connection piece, from which the thread segments extend radially outwards.

7. Air filter connection unit according to one of claims 1 to 6, **characterised in that** the thread course segments (12.1, 12.2, ... 12.n) extend over an arc of 360° with reference to the central axis of the connection piece (11).

8. Air filter connection unit according to one of claims 1 to 7, **characterised in that** between the free-wheel groove (23) and the movement thread there is disposed a ring-shaped shoulder, the height of which is greater than the height of the thread courses at the movement thread.

9. Air filter connection unit according to one of claims 1 to 8,
**characterised in that** the movement thread (22) is conical.

10. Air filter including an air filter connection unit according to one of the preceding claims, wherein the connecting flange (11) is incorporated into a wall (10) of an air filter housing (15) and an air line element (30) is connected to the connection piece (25).

## Revendications

1. Unité de raccordement de filtre à air comportant une bride de raccordement (11) ainsi qu'un ajutage de raccordement (20) susceptible d'être couplé par une liaison par enclipsage,
**caractérisée en ce que**
la bride de raccordement (11) comporte une ouverture (13) ronde ayant au moins une spire de filetage intérieur (12) subdivisée en différents segments de spire de filetage (12.1, 12.2,..., 12.n) de forme courbe, susceptible d'être déformés élastiquement et
l'ajutage de raccordement (20) a une forme cylindrique et comporte au moins un filetage de mouvement (22) qui se termine dans une rainure de roue libre (23) de l'ajutage de raccordement (20).

2. Unité de raccordement de filtre à air selon la revendication 1,
**caractérisée en ce que**
la rainure de roue libre (23) se termine au niveau d'une collerette (24) dont le diamètre extérieur est supérieur au diamètre intérieur de la spire de filetage intérieur (12).

3. Unité de raccordement de filtre à air selon la revendication 1,
**caractérisée en ce que**
la rainure de roue libre (23) se termine par une collerette (24) dont le diamètre extérieur est supérieur au diamètre du cercle primitif de la bride de raccordement (11) à partir de laquelle les segments de spire (12) s'étendent radialement vers l'intérieur.

4. Unité de raccordement de filtre à air comportant une bride de raccordement et un ajutage de raccordement susceptible d'être couplé à celle-ci par une liaison par enclipsage,
**caractérisée en ce que**
la bride de raccordement comporte une ouverture ronde ayant au moins une spire de filetage intérieur et l'ajutage de raccordement a une forme cylindrique et comporte au moins une spire de filetage extérieur subdivisé en différents segments de spire de filetage, de forme courbe, susceptibles de se déformer élastiquement et se termine dans une rainure de roue libre de la bride de raccordement.

5. Unité de raccordement de filtre à air selon la revendication 4,
**caractérisée en ce que**
la rainure de roue libre se termine par une collerette dont le diamètre intérieur est supérieur au diamètre extérieur du filetage de mouvement.

6. Unité de raccordement de filtre à air selon la revendication 5,
**caractérisée en ce que**
la rainure de roue libre se termine à une collerette dont le diamètre intérieur est supérieur au diamètre du cercle primitif de l'ajutage de raccordement d'où des segments de spire partent radialement vers l'extérieur.

7. Unité de raccordement de filtre à air selon l'une des revendications 1 à 6,
**caractérisée en ce que**
les segments de spire de filetage (12.1, 12.2,...12.n) s'étendent sur un arc de 360° par rapport à l'axe central de l'ajutage de raccordement (11).

8. Unité de raccordement de filtre à air selon l'une des revendications 1 à 7,
**caractérisée par**
un épaulement annulaire entre la rainure de roue libre (23) et le filetage de mouvement et dont la hauteur est supérieure à la hauteur des spires du filetage de mouvement.

9. Unité de raccordement de filtre à air selon l'une des revendications 1 à 8,
**caractérisée en ce que**
la spire de mouvement (22) a une forme conique.

10. Unité de raccordement de filtre à air selon l'une des revendications précédentes,
dans laquelle la bride de raccordement (11) est intégrée dans une paroi (10) d'un boîtier de filtre à air (15) et un élément de conduite d'air (30) est relié à l'ajutage de raccordement (25).
